Europäisches Patentamt

European Patent Office

Office européen des brevets

(11) Publication number: 0 208 339
A2

# (12) EUROPEAN PATENT APPLICATION

(21) Application number: 86111471.8

(22) Date of filing: 20.04.82

(51) Int. Cl.⁴: F16D 65/60

(30) Priority: 15.06.81 US 273537

(43) Date of publication of application:
14.01.87 Bulletin 87/03

(60) Publication number of the original application in
accordance with Art.76 EPC: 0 067 287

(84) Designated Contracting States:
DE FR GB IT SE

(71) Applicant: **Rockwell International Corporation**
**600 Grant Street**
**Pittsburgh Pennsylvania 15219(US)**

(72) Inventor: **Cumming, James Charles**
**25 Woodside Park**
**Pleasant Ridge Michigan 48069(US)**

(74) Representative: **Schwepfinger, Karl-Heinz,**
**Dipl.-Ing. et al**
**Prinz, Leiser, Bunke & Partner Manzingerweg**
**7**
**D-8000 München 60(DE)**

(54) Automatic brake adjusting mechanism.

(57) Automatic brake adjusting mechanism which in-
cludes a ratchet member (51) having helical teeth
about a cylindrical outer surface, a pawl (70), means
biasing the pawl into engagement with the helical
teeth of the ratchet member and an elongate release
pin (84) associated with the pawl (70) whereby the
release pin (84) may be moved against the biasing
means to disengage the pawl (70) from the ratchet
member (51) thereby permitting the brake shoes to
be backed away from a brake drum without disas-
sembling component parts of the mechanism.

FIG. 4

## Automatic Brake Adjusting Mechanism

This invention is directed to an automatic brake adjusting mechanism for a vehicle brake assembly which automatically adjusts for brake shoe lining wear in response to movement of the brake shoes beyond a predetermined distance. More specifically, the invention is directed to mechanism which permits the automatic adjusting mechanism to be readily disengaged without disassembling component parts thereof.

One such automatic adjusting mechanism which employs a pawl and ratchet responsive to overtravel of a cam brake actuating lever on the brake application stroke to effect automatic slack adjustment upon return movement of the lever is disclosed in US-A-3,949,840. That lever and automatic adjusting mechanism, as well as other mechanisms used for the same purpose, incorporates means for manually adjusting the brake actuating lever relative to the cam shaft. In the automatic adjusting mechanism disclosed in the above-referenced patent, the orientation of the teeth provided to the pawl permits rotation of the ratchet member to move or position the brake shoes closer to the brake drum and thereby adjust for lining wear. However, the orientation of the teeth on the pawl prevents rotation of the ratchet member in the opposite direction and must be disengaged when the manual means is employed to move or reposition the brake shoes further away from the brake drum. The pawl may be removed from the assembly to permit movement of the brake shoes away from the brake drum; but the parts are relatively small and may be misplaced, lost or improperly reinstalled when such removal is attempted in the field.

The brake actuator motors may also be provided with spring type auxiliary or safety brake mechanisms such as that disclosed in US-A-3,020,094. Such auxiliary or safety brake mechanisms utilize a spring normally compressed to an inoperative position by brake system air pressure which expands and moves the actuating lever to apply the brake in the absence of brake system air pressure. Such devices are useful as parking brake mechanisms when the vehicle is not being operated and function as emergency or safety brake mechanisms in the event the vehicle loses its brake system air pressure when in operation. Such devices pose a problem, however, when they are active as an auxiliary, parking brake on a vehicle such as a trailer which does not have its own source of air pressure to release the spring. This may occur with a trailer separated from its towing vehicle and parked along side a highway or in a truck, railroad or ship terminal yard when it becomes necessary to shuttle the trailer; as for example, to load it on a railroad flat car or ship.

FR-A-2,393,194 discloses a braking cylinder or a railroad waggon braking system equipped with a brake adjusting mechanism including a ratchet and pawl assembly. One end of the pawl extends out of a bore wherein the pawl is slidingly received. This end of the pawl is engaged by an operating lever permitting the pawl to be manually disengaged from the ratchet.

The present invention avoids certain of the foregoing problems of the prior art by providing in an automatic slack adjusting mechanism means for readily disengaging a spring biased pawl engaged with helical teeth provided to a ratchet member to manually move or reposition a brake shoe relative to a surrounding brake drum without disassembling component parts of the automatic adjusting mechanism.

In accordance with the invention, a brake adjusting mechanism is provided as defined in claim 1, and a preferred embodiment thereof is indicated in claim 2.

Further details will stand out from the following description of an embodiments of the invention with reference to the drawings wherein:

Figure 1 is a side elevation partly in section of a cam actuated vehicle brake assembly;

Figure 2 is a top plan view of the vehicle brake assembly of Figure 1;

Figure 3 is a view taken on the line 3-3 of Figure 2;

Figure 4 is an enlarged side elevation view of the lever and automatic slack adjusting mechanism of the present invention with part of the mechanism housing broken away for clarity of illustration;

Figure 5 is a sectional view taken on the line 5-5 of Figure 4.

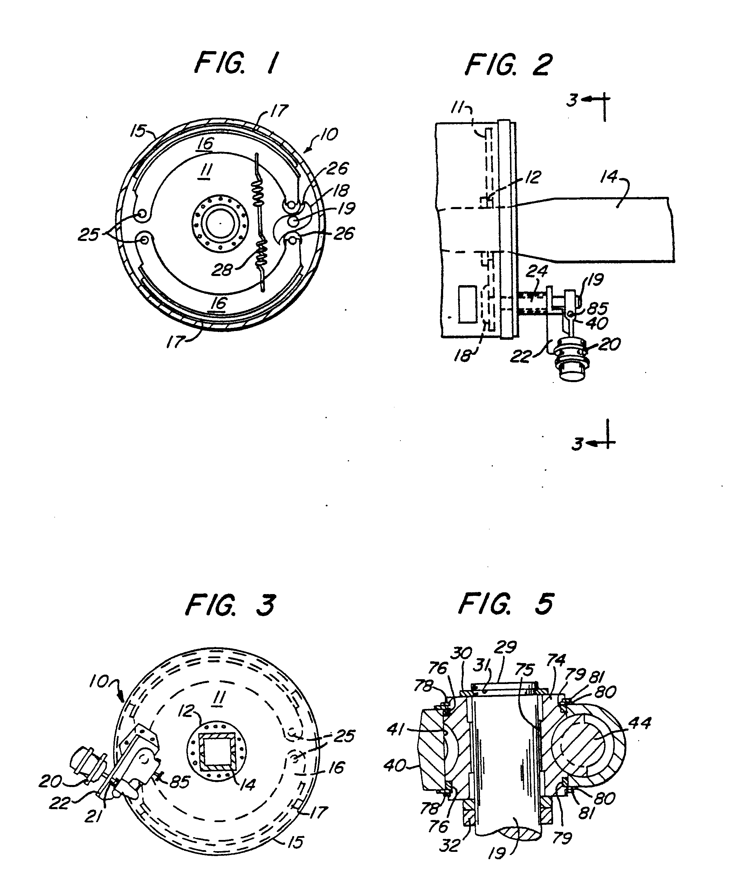

In Figures 1-3, the present invention is shown in combination with a cam actuated brake assembly 10 supported by a spider 11 secured to a flange 12 which in turn is welded to a vehicle axle 14. The brake assembly 10 is comprised of a brake drum 15, a pair of brake shoes 16, a brake actuating cam 18 non-rotatably secured to a camshaft 19, a spring brake actuating motor 20 having a reciprocating brake actuating rod 21 and a lever 40 operatively connecting the brake actuating rod 21 and the camshaft 19. The brake shoes 16 are each respectively provided with friction linings 17.

The actuating motor 20 is supported by an angle bracket 22 secured as by welding to one end of a tube 24. The tube 24 is welded at its other end to a mounting bracket secured to the spider 11 and encloses a length of the camshaft 19.

The brake shoes 16 are each respectively mounted for pivotal movement about a pin 25 fixed to the spider 11. The opposite ends of the brake shoes 16 are provided with roller followers 26 biased into engagement with an S-type brake actuating cam 18 by a spring 28.

The brake assembly 10 as thus far described is well known in the art and is normally operated by depressing the vehicle brake pedal which supplies fluid pressure, usually air, to the service brake chamber of the actuating motor 20. Air pressure is independently supplied to the auxiliary brake chamber to compress the spring brake while the vehicle is in operation and has brake air pressure. The fluid pressure operating on a piston or diaphragm in the service chamber of motor 20 forces the actuating rod 21 outwardly of the motor housing thereby rotating the lever 40 and camshaft 19 counterclockwise as viewed in Figure 3 about the axis of the camshaft 19. The camshaft 19 rotates the brake actuating cam 18 in a clockwise direction as viewed in Figure 1. Rotary movement of the cam 18 as transmitted through the roller followers 26 forces the brake shoes 16 to pivot about the pins 25 until the brake shoe linings 17 are pressed into frictional contact with the brake drum 15. When the brakes are released, fluid pressure is exhausted from the service chamber of actuator motor 20 and the actuating rod 21 and lever 40 are returned to their normally retracted positions as shown in Figure 3. When the fluid pressure is exhausted from the service chamber of actuating motor 20, the brake shoes 16 and the linings 17 are returned by spring 28 to their normal running position as shown in Figure 1 where a clearance space is provided between the linings 17 and the brake drum 15. The spring 28 acting through the brake shoes 16 and roller followers 26 also assists in returning the cam 18, camshaft 19 and lever 40 to their normal non-braking position as shown in Figures 1-3.

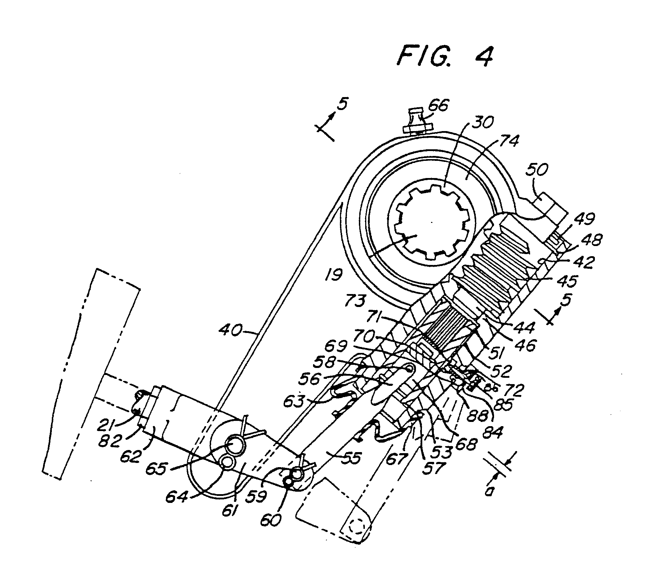

The invention will now be described with particular reference to Figures 4 through 7 where the lever 40 and the automatic slack adjusting mechanism are shown in detail.

The lever 40 is an elongated housing having an opening 41 adjacent one end and a bore 42 extending partially along the length of the housing. A shaft 44 having a worm 45 formed integral therewith is rotatably mounted in the bore between a shoulder 46 and retaining ring 48. A seal 49 is provided axially outward of the retaining ring 48. The internal surfaces of the ring 48 and the shoulder 46 provided radial bearing surfaces for the worm 45. The end of the shaft 44 axially outward of the worm seal 49 is formed as a square driving head 50 to provide an externally accessible means for manually rotating the shaft. The opposite end of the shaft 44 extends beyond the shoulder 46 and has a longitudinally movable rotary driving splined connection internally of a or ratchet member 51 provided in the form of a hollow cylinder. The exterior surface portion of the ratchet member concentric with the interior splined connection to the shaft 44 is provided with a plurality of circumferentially spaced, axially extending helical teeth 52.

A piston 54 is freely slidably disposed within the interior of ratchet member 51. The hollow interior of the ratchet member 51 is provided with a circumferentially extending groove axially outward of the piston 54. A retaining ring 57 is fitted to the goove 53 to prevent the piston 54 from being withdrawn from the ratchet member and to provide a piston engaging abutment for moving the ratchet member axially outward of the bore 42 in response to axially outward movement of the piston 54 beyond a predetermined distance d, as shown in Figure 4.

The piston 54 is diametrically slotted to receive the flat end 56 of a rod 55 pivotally connected to the piston 54 by a pin 58. The opposite end of the rod 55 is pivotally connected by means of a pin 59 and cotter key 60 to the bifurcated end of a clevis 61. The opposite end of the clevis 61 is provided with an internally threaded bore 62 which receives the threaded end of brake actuating rod 21. The end of the lever 40 opposite the opening 41 extends between the legs of the bifurcated end of clevis 61 where it is pivotally connected intermediate the ends of the clevis by means of a cotter key 64 and pin 65 passing through an appropriate sized hole in the lever.

The end of the bore 42 receiving the rod 55 is closed by a flexible boot seal 63 elastically snugly fitted about the rod 55 and secured by a retaining clamp 67 to a boss-like projection of the lever 40.

The lever 40 is also provided with a second bore 68 which intersects the bore 42 opposite the helical toothed portion 52 of ratchet member 51. The outer end of the bore 68 is internally threaded to receive an apertured cap screw 69. A pawl 70 having buttress teeth 71 formed at one end thereof is slidably received within the interior portion of bore 68 where it communicates with bore 42. A small diameter bore is also provided at the surface of the pawl 70 opposite from the buttress teeth 71 and one end of an elongate release pin 84 is press fit to the pawl bore. The release pin 84 extends through the aperture 86 of cap screw 69 out of the bore 68 where it is provided with a knurled knob 85. A spring 72 is seated at one end against a fixed interior surface of cap screw 69 and the other end is seated against a radially extending surface of the pawl 70 carried by release pin 84. The spring biases the buttress teeth 71 of pawl 70 into engagement with the helical teeth 52 provided to ratchet member 51. An elastomeric oil seal 88 is disposed in a recess between the release pin 84 and the apertured cap screw 69.

A worm gear 74 having a splined internal opening 75 is mounted for rotation in the lever opening 41. As best shown in Figure 5, a pair of circumferentially extending grooves 76, 78 are provided adjacent each axial end of the worm gear 74. The grooves are each fitted with an annular sealing ring 79. A thrust washer 80 is provided axially outward of each annular seal 79 and a pair of retaining rings 81 seated in the grooves 78 and bearing against the axially outer surface of the thrust washers 80 prevent axial movement of the worm gear assembly whilepermitting the worm gear 74 to rotate within the opening 41. A fitting 66 is provided to introduce lubricant between the worm gear 74 and the opening 41, and by means of passage 73, to the bore 42.

As best shown in Figure 4, the teeth of the worm 45 provide a threaded connection with the teeth of the worm gear 74. Rotary movement of the shaft 44 and the worm 45 in the bore 42 will rotate the worm gear 74 and the camshaft 19 relative to the lever 40 and move or position the brake shoes 16 relative to the brake drum 15. Since the worm 45 is fixed by shoulder 46 and retaining ring 48 against axial movement in the bore 42, the worm 45 also functions as a stationary part of the lever 40 and rotates the worm gear 74 and camshaft 19 when the lever 40 is pivoted about the axis of the camshaft 19 by the actuating rod 21 and clevis 61.

The lever 40 is installed to a brake assembly in the following manner. The clevis 61 is threaded to the actuating rod 21 and secured in place by a jam nut 82. The lever 40 is then axially positioned over the splined end 29 of camshaft 19 and secured in place by a retaining ring 30 fitted to a groove 31 provided adjacent the end 29 of camshaft 19. A spacer or plurality of washers 32 may be provided between the inboard surface of the lever 40 and the angle bracket 22 to align the lever 40 with the actuating rod 21. The lever 40 is then rotated about the camshaft 19 by manually rotating the square driving head 50 of shaft 44 until the openings in lever 40 and clevis 61 are aligned. The lever 40 and clevis 61 are connected by the pin 65 and cotter key 64. The rod 55 is then connected by means of the pin 59 and cotter key 60 to the clevis 61. The assembly may then be adjusted either manually by rotating the square driving head, or automatically by applying the releasing the brakes until the desired running clearance is established between the brake shoe linings 17 and the brake drum 15.

Automatic Slack Adjusting Mechanism

Automatic adjustment is effected by operation of the shaft 44, worm 45, ratchet member 51, piston 54 and the linkage55, 61 pivotally connecting the piston 54 to the lever 40. Axial movement of the actuating rod 21 in a brake applying direction moves the clevis 61 and lever 40 counterclockwise, as viewed in Figures 3 and 4, about the axis of the camshaft 19. During such movement, the clevis 61 traverses an arcuate path as shown by the chain line in Figure 4 and, pivoting about the pin 65, moves the rod 55 and piston 54 outward relative to the ratchet member 51 and bore 42 as shown by phantom lines. The spacing or distance d provided between the piston 54 and the retaining ring 57 permits the piston 54 to move freely within that axial length of the ratchet member. The distance d is calculated relative to the arcuate mvoement of the camshaft 19 which is required to take up the normal running clearance desired between the brake lining 17 and the brake drum 15 and a substantial portion of that arcuate movement which produces distortion in the brake assembly. The remaining arcuate movement producing distortion in the assembly and the lining wear allowable before automatic adjustment is to be effected are accommodated by the axial length of each of the buttress teeth 71. Thus, as long as the brake linings 17 have not experiencd appreciable wear, the piston 54 will abut the ring 57 and move the ratchet member 51 outward relative to the bore 42 and pawl teeth 71. After an acceptable amount of lining wear, the ratchet member 51 moving relative to the spring biased pawl 70 will cause the pawl 70 to retract and engage an adjacent set of helical teeth 52 on the ratchet member 51. When the service brake is released, the lever 40 and ratchet member 51 return to the normal position as shown in Figure 4 and the buttress teeth 71 of the pawl 70 rotate the ratchet member 51, shaft 44 and worm 45 to effect a predetermined arcuate movement of the worm gear 74 and camshaft 19. This will effect a slight rotary adjustment of the S-type actuating cam 18 as shown in Figure 1 and reposition the brake shoes 16 outwardly until the desired running clearance is again established between the linings 17 and the brake drum 15.

To manually adjust the mechanism to reposition or move the brake shoes 16 away from the surrounding brake drum 17, one need only grasp the knurled knob 85 of release pin 84 and withdraw the pin slightly out of the bore 68 thereby compressing the spring 72 and withdrawing the buttress teeth 71 of the pawl 70 from engagement with the helical teeth 52 on the ratchet member 51. Once the pawl is disengaged from the ratchet member 51, a wrench can be applied to rotate the square driving head 50 and the worm 45 which in turn will rotate the worm gear 74 and camshaft 19 in a clockwise direction as shown in Figures 3 and 4 to move or "back off" the brake shoes relative to the brake drum 15. This is important, for example, when it is necessary to move a vehicle such as a trailer equipped with a spring brake actuator motor and parked at a railway or truck terminal or on dockside without a source of air pressure to compress the spring and release the auxiliary parking brake. In such an instance, an attendant can withdraw the release pin 84 and back off the brake shoes by rotating the square driving head 50 as described above to permit movement of the vehicle without disassembling the automatic adjusting mechanism.

The foregoing cam actuating lever and automatic slack adjusting mechanism has been described in combination with an S-type oscillating rotary cam actuated drum type brake system. The actuating lever and automatic adjusting mechanism is not limited to use in a drum type brake system but may be used in combination with other cam actuated brake systems employing an actuating lever; for example, a cam actuated disc type brake system or in a wedge actuated brake system utilizing a pawl and ratchet automatic adjusting mechanism.

The invention may also be embodied in other specific forms without departing from the spirit or essential characteristics thereof. The foregoing description is therefore is to be considered as illustrative and not restrictive, the scope of the invention being defined by the appended claims, and all changes which come within the meaning and range of equivalency of the claims are therefore intended to be embraced thereby.

## Claims

1. A lever actuator and automatic slack adjusting mechanism for a vehicle brake assembly comprising:

an elongated housing (40) having an opening therethrough and a first bore (42);

a worm gear (74) rotatably mounted in said opening; a shaft (44) mounted for rotation in said bore (42) and having a worm (45) non-rotatably secured thereto and drivingly engaging said gear (74);

a ratchet member (51) slidably and rotatably mounted in said first bore (42), said ratchet (51) member having helical teeth about a generally cylindrical outer surface thereof and a rotary driving connection with said shaft (44);

a second bore (68) in said housing (40) and communicating with said first bore (42) and

a pawl assembly (70) carried by said second bore (68), said pawl assembly comprising a pawl axially movable in said second bore (68) and having teeth formed for engagement with said helical teeth of said ratchet member (51), characterized in that an apertured member (69) is seated in the open end of said second bore (68), a release pin (84) extending through said apertured member (69) and a spring (72); in that said pawl (70) is fixed at one end of said release pin (84) internally of said second bore (68); in that means preventing withdrawal of the other end of said release pin (84) from said apertured member (69) are provided and in that said spring (72) is carried by said release pin (84) and biases said pawl (70) into engagement with said ratchet member (52), whereby said pawl (70) may be disengaged from said ratchet member (52) by manually moving said release pin (84) axially in said second bore (68) against said spring (72) and said pawl assembly may be removed as an integral unit by removing said apertured member (69) from said open end of said second bore (68).

2. The lever actuator and automatic slack adjusting mechanism defined by Claim 1 wherein said apertured member (69) is a cap screw having an aperture (86) therethrough and said cap screw (69) is threaded to the outer end of said second bore (68).

3. The lever actuator and automatic slack adjusting mechanism defined by Claim 1 or 2 wherein a knob (85) is secured to said other end of release pin (84).

FIG. 1

FIG. 2

FIG. 3

FIG. 5

FIG. 4